# EUROPEAN PATENT SPECIFICATION

(11) **EP 2 258 549 B1**
(45) Date of publication and mention of the grant of the patent: **17.09.2014**
(21) Application number: 09724710.0
(22) Date of filing: 12.03.2009
(51) Int. Cl.: B32B 27/34, B29C 55/12, B32B 27/30, B65D 65/40, C08J 7/04, B29K 77/00

(54) **BIAXIALLY STRETCHED POLYAMIDE RESIN FILM HAVING GAS BARRIER PROPERTIES AND PROCESS FOR PRODUCING THE BIAXIALLY STRETCHED POLYAMIDE RESIN FILM**
BIAXIAL GESTRECKTER POLYAMIDHARZFILM MIT GASSPERREIGENSCHAFTEN SOWIE VERFAHREN ZUR HERSTELLUNG DES BIAXIAL GESTRECKTEN POLYAMIDHARZFILMS
FILM DE RÉSINE DE POLYAMIDE ÉTIRÉ BIAXIALEMENT PRÉSENTANT DES PROPRIÉTÉS DE BARRIÈRE CONTRE LES GAZ, ET PROCESSUS DE PRODUCTION DU FILM DE RÉSINE DE POLYAMIDE ÉTIRÉ BIAXIALEMENT

(30) Priority: 26.03.2008 JP 2008080970
(43) Date of publication of application: 08.12.2010
(73) Proprietor: Unitika, Ltd., Amagasaki-shi, Hyogo 660-0824 (JP)
(72) Inventor: WU, Xiaorui, Kyoto, 611-0021 (JP); TANAKA, Nobuhiro, Kyoto, 611-0021 (JP); NODA, Atsuko, Kyoto, 611-0021 (JP)
(74) Representative: Kügele, Bernhard
(86) International application number: PCT/JP2009/001100
(87) International publication number: WO 2009/119024

(56) References cited:
- EP-A1- 1 541 340
- EP-A1- 2 098 560
- WO-A1-2008/075461
- JP-A- 8 120 099
- JP-A- 9 193 305
- JP-A- 2001 081 189
- JP-A- 2002 086 614

## Description

### Technical Field

The present invention relates to a biaxially stretched polyamide resin film having gas barrier properties and a process for producing the biaxially stretched polyamide resin film.

### Background Art

Biaxially stretched polyamide resin films such as biaxially stretched films of nylon 6 or nylon 66 are excellent in mechanical properties typified by the properties such as tensile strength, pinhole strength and impact resistant strength, and are provided with many favorable properties such that these resin films are substantially nontoxic and odorless. Therefore, laminated films obtained by using the biaxially stretched polyamide resin film as a substrate and by bonding a sealant made of polyolefin film to the substrate by a method such as dry laminating or extrusion laminating are widely used as packaging materials, particularly for food. Additionally, for the purpose of imparting to the biaxially stretched polyamide resin film the barrier properties against oxygen gas, water vapor or the like, coating of such a film with a vinylidene chloride copolymer is frequently performed.

When a biaxially stretched polyamide resin film is coated with a vinylidene chloride copolymer or the like, an adhesive is used or the surface of the film is subjected to a corona discharge treatment or a charged plasma treatment, for the purpose of improving the adhesion between the biaxially stretched polyamide resin film and the coating layer. However, even when such a technique is applied, the adhesion between the biaxially stretched polyamide resin film and the coating layer is frequently insufficient. In particular, when the coated biaxially stretched polyamide resin film is used as a packaging material for packaging an aqueous product and the aqueous product is subjected to boiling sterilization after having been filled in the package, frequently the concerned adhesion is remarkably degraded after performing the boiling sterilization step.

One of the causes for the degradation of the adhesion between the film surface and the coating layer is the fact that a low molecular weight substance such as a monomer is present in the film resin. Such a low molecular weight substance is deposited on the film surface to cause the degradation of the adhesion between the film surface and the coating layer. This tendency is remarkable particularly in the cases of the sterilization treatment such as boiling or retorting.

For the purpose of solving this problem, the use of, for example, nylon 11 and nylon 12 which are large in molecular weight has been proposed (JP4-325159A). However, the method according to this proposal is high in cost and low in versatility.

Aside from this, a technique has been developed in which the amount of the monomer is reduced by adding such compounds that react with the terminal carboxyl groups and the terminal amino groups of polyamide. For example, a method has been proposed in which an organic glycidyl ester is made to react with the carboxyl groups and the amino groups of polyamide (JP10-219104A). However, in the method according to this proposal, the amount of the remaining monomer is still high such that the amount of the extracted monomer is 0.35 to 0.5% by mass, and the reduction amount of the monomer is insufficient.

Further, a method has been proposed in which the deposited substances occurring on the film are removed by using solvents (JP2006-247593A). However, such a method involves complicated steps, takes a large labor and a long time for controlling the solvent, and is low in productivity and high in cost.

From the above-described background, the reduction of the amount of the extracted monomer in the polyamide resin film is strongly demanded.

### Disclosure of the Invention

### Problems to be Solved by the Invention

An object of the present invention is to provide a biaxially stretched polyamide resin film having gas barrier properties wherein the adhesion between the biaxially stretched polyamide resin film and the resin layer having gas barrier properties is improved while the excellent properties of the biaxially stretched polyamide resin film are being maintained and a process for producing the biaxially stretched polyamide resin film having gas barrier properties.

### Means for Solving the Problems

For the purpose of achieving the above-described object, the present inventors made a diligent study, and consequently have perfected the present invention by discovering that by disposing a gas barrier coat layer on at least one side of a biaxially stretched polyamide resin film in which the amount of the extracted monomer is 0.1% by mass or less, the adhesion with the coating layer is drastically improved.

The gist of the present invention is as follows.
(1) A biaxially stretched polyamide resin film having gas barrier properties, wherein a gas barrier coat layer is formed on at least one side of a biaxially stretched polyamide resin film, the thickness of the gas barrier coat layer is 0.5 to 5 µm, and the amount of the extracted monomer in the polyamide resin film is 0.1% by mass or less.
(2) The biaxially stretched polyamide resin film having gas barrier properties, according to (1), wherein the gas barrier coat layer is formed of a polyvinylidene chloride copolymer.
(3) The biaxially stretched polyamide resin film having gas barrier properties, according to (1) or (2), wherein the adhesion strength between the polyamide resin film and the gas barrier coat layer is 0.8 N/cm or more.
(4) The biaxially stretched polyamide resin film having gas barrier properties, according to any one of (1) to (3), wherein the thickness thereof is 10 to 40 µm.
(5) The biaxially stretched polyamide resin film having gas barrier properties, according to any one of (1) to (4), wherein the gas barrier coat layer is formed, through the intermediary of an anchor coat layer, on at least one side of the biaxially stretched polyamide resin film.
(6) A process for producing the biaxially stretched polyamide resin film having gas barrier properties according to any one of (1) to (4), the process including in the order of description: a monomer removal step of removing the monomer in an unstretched polyamide resin film; a step of biaxial stretching; and a step of forming a gas barrier coat layer.
(7) A process for producing the biaxially stretched polyamide resin film having gas barrier properties according to (5), the process including in the order of description: a monomer removal step of removing the monomer in an unstretched polyamide resin film; a step of biaxial stretching; a step of forming an anchor coat layer; and a step of forming a gas barrier coat layer.
(8)The process for producing a biaxially stretched polyamide resin film having gas barrier properties, according to (6) or (7), wherein in the monomer removal step, the film is brought into contact with water set at a pH of 6.5 to 9.0 and at a temperature of 20 to 70°C for 0.5 to 10 minutes.
(9) The process for producing a biaxially stretched polyamide resin film having gas barrier properties, according to any one of (6) to (8), wherein:the process includes a water content regulation step after the monomer removal step and before the step of biaxial stretching; and in the water content regulation step, the water content of the unstretched polyamide resin film is set at 2 to 10% by mass.
(10) A packaging material including at least one layer of the biaxially stretched polyamide resin film having gas barrier properties according to any one of (1) to (5).

### Advantages of the Invention

In the biaxially stretched polyamide resin film having gas barrier properties of the present invention, a gas barrier coat layer is disposed on a polyamide resin film in which the amount of the extracted monomer therein is reduced to 0.1% by mass or less, and consequently, without impairing the properties of the biaxially stretched polyamide resin film, a high adhesion of the gas barrier coat layer with the biaxially stretched polyamide resin film can be imparted. When this film is used as a packaging material, the degradation of the adhesion after the boiling treatment can be suppressed. Therefore, this film can be suitably used as various packaging materials in the fields of food, medicines and the like.

The formation of the anchor coat layer between the biaxially stretched polyamide resin film and the gas barrier coat layer enables to further improve the adhesiveness of the gas barrier coat layer.

According to the production process of the present invention, the monomer in an unstretched film is removed, and then the unstretched film is biaxially stretched, and consequently the amount of the monomer generated at the time of producing the stretched film is reduced. Therefore, the environment surrounding the production equipment is not contaminated, and consequently, a high-quality film can be produced.

In other words, according to the present invention, by reducing the low molecular weight substances in the polyamide resin film, a biaxially stretched polyamide resin film having gas barrier properties is obtained in which improved is the adhesion between a biaxially stretched polyamide resin film and the gas barrier coat layer, having barrier properties, formed on at least one side of the biaxially stretched polyamide resin film. The biaxially stretched polyamide resin film having gas barrier properties of the present invention is enhanced in the adhesiveness thereof, and consequently, can be suitably used for packaging materials by being laminated with, for example, sheets of polyolefin resins such as polyethylene and polypropylene as sealants.

### Best Mode for Carrying Out the Invention

Hereinafter, the present invention is described in detail.

The biaxially stretched polyamide resin film (hereinafter, referred to as "substrate film") in the present invention is required to be such that the amount of the extracted monomer in the substrate film is 0.1% by mass or less. The amount of the extracted monomer is preferably 0.05% by mass or less and more preferably 0.02% by mass or less.

When the amount of the extracted monomer exceeds 0.1% by mass, the extracted monomer is deposited on the surface of the substrate film, and consequently the adhesion between the substrate film and the barrier coat layer is degraded. In particular, when the biaxially stretched polyamide resin film is used as a packaging material, an aqueous content is filled in the interior of the packaging material and the content is subjected to boiling sterilization or the like, the adhesion between the substrate film and the coat layer is further degraded.

The smaller is the amount of the extracted monomer, the better; however, with the decrease of the amount of the extracted monomer, the time required for the monomer removal step is increased, and hence the productivity tends to be degraded. Therefore, the lower limit of the amount of the extracted monomer is approximately 0.001% by mass.

The amount of the extracted monomer in the substrate film in the present invention is calculated by the following measurement method. Specifically, about 0.5 g of a film sampled as an about 0.5-cm square specimen or specimens is precisely weighed, the specimen is subjected to an extraction with 10 ml of distilled water in a boiling water bath (100°C) for 2 hours, and for the obtained extraction solution, the amount of the extracted monomer of the film is measured by liquid chromatography.

Examples of the polyamide resin used for the substrate film include nylon 6, nylon 66, nylon 46, nylon 69, nylon 610, nylon 612, nylon 11, nylon 12 and polymetaxylylene adipamide (nylon MXD6), and mixtures, copolymers and composites of these. Preferable among these is nylon 6, which is excellent in cost performance, from the viewpoints of the productivity and the performances.

More preferably, for the purpose of suppressing the monomer generation at the time of melting, these polyamide resins include, as terminal blocking agents, an organic glycidyl ester, a dicarboxylic acid anhydride, a monocarboxylic acid such as benzoic acid, a diamine and the like.

The relative viscosity of the polyamide resin constituting the substrate film is not particularly limited; however, the relative viscosity measured under the conditions that 96% sulfuric acid is used as a solvent, the measurement temperature is 25°C and the concentration is 1 g/dl is preferably within a range from 1.5 to 5.0, more preferably from 2.5 to 4.5 and furthermore preferably from 3.0 to 4.0. When the relative viscosity of the polyamide resin is less than 1.5, the mechanical properties of the film tend to be remarkably degraded. When the relative viscosity of the polyamide resin exceeds 5.0, the film formability tends to be disturbed.

These polyamide resins may contain, where necessary as added thereto within an extent not adversely affecting the performances of the film, one or two or more various additives such as a pigment, an antioxidant, an ultraviolet absorber, a preservative agent, an antistatic agent, an antiblocking agent and an inorganic fine particle.

For the purpose of improving the slipping property of the film and other purposes, these polyamide resins may also contain, as mixed therewith, one or two or more of various inorganic or organic lubricants. Examples of such lubricants include clay, talc, calcium carbonate, zinc carbonate, wallastnite, silica, alumina, magnesium oxide, calcium silicate, sodium aluminate, calcium aluminate, magnesium aluminosilicate, glass balloon, carbon black, zinc oxide, antimony trioxide, zeolite, hydrotalcite, layered silicates and ethylene-bis-stearic acid amide.

The substrate film used in the present invention is produced by the following method.

The substrate film used in the present invention is obtained, for example as follows: a polyamide resin composition is heated to be melted with an extruder, extruded from a T-die in a form of a film, and solidified by cooling on a rotating cooling drum by applying a heretofore known casting method such as air knife casting or electrostatic casting to form an unstretched film; and the unstretched film is subjected to a biaxial stretching treatment to yield the intended substrate film.

The stretching treatment method includes a successive biaxial stretching method in which longitudinal stretching is conducted and then a transverse stretching treatment is conducted, and a simultaneous biaxial stretching method in which a longitudinal stretching treatment and a transverse stretching treatment are conducted simultaneously. In either of these stretching methods, the stretching treatment is preferably conducted in such a way that the attained in-plane magnification is 9 or more. When such an in-plane magnification is attained, preferably the in-plane orientation coefficient of 0.05 or more is attained.

The stretching method is not particularly limited; however, because of being efficient, preferable is the simultaneous biaxial stretching method which enables to conduct a melt-film formation, and as described below, the monomer removal step, the water content regulation step, a stretching step, a heat setting step and a cooling step.

The film having been subjected to the successive biaxial stretching or the simultaneous biaxial stretching is heat-fixed at temperatures of 150 to 220°C in the tenter where the stretching treatment has been conducted, and where necessary, subjected to a relaxation treatment in the longitudinal direction and/or the transverse direction within a range of 10% or less and preferably within a range from 2 to 6%.

The production of the biaxially stretched polyamide resin film having gas barrier properties of the present invention requires the monomer removal step to be set at an optional stage in the above-described film production process. Although the monomer removal step is claimed to be set at an optional stage, the monomer removal step is preferably conducted after melting the polyamide resin for molding into a film shape because the monomer in the polyamide resin undergoes the increase of the generated amount thereof caused by the melting of the polyamide resin. The monomer removal step may be conducted at any of a stage of the unstretched film, a stage after the longitudinal stretching and a stage after the biaxial stretching; however, the monomer removal step is preferably conducted at the stage of the unstretched film in which neither the crystallization nor the orientation of the film has not yet proceeded appreciably because the efficiency of the monomer removal is satisfactory at such a stage and no monomer is discharged into the air during the stretching step.

The monomer removal step is preferably conducted by bringing under tension the polyamide film into contact with water set at a pH of 6.5 to 9.0 and at a temperature of 20 to 70°C in a monomer removal vessel for 0.5 to 10 minutes.

In the monomer removal step, the temperature of the water in the monomer removal vessel is preferably 20 to 70°C, as described above, and is more preferably 30 to 60°C and furthermore preferably 40 to 50°C. When the temperature of the water in the monomer removal vessel is lower than 20°C, the monomer is hardly removed in a short time. When the temperature of the water exceeds 70°C, in a case where the monomer removal step is conducted at the stage of the unstretched film, the unstretched film tends to undergo wrinkling, and hence the subsequent stretching tends to be non-uniform to degrade the quality of the stretched film. Additionally, when the temperature of the water exceeds 70°C, operability may be degraded such that troubles such as the film breaking and the failure in gripping the film ends occur at the time of the subsequent stretching.

The pH of the water in the monomer removal vessel is preferably 6.5 to 9.0 as described above, more preferably 7.0 to 8.5 and furthermore preferably 7.5 to 8.0. When the pH is less than 6.5, the oxidation degradation of the polyamide resin film tends to proceed. When the pH exceeds 9.0, alkaline water attaches to the film and such water tends to be brought into contact with the worker unfavorably from the safety viewpoint.

The time during which the polyamide resin film is in contact with water in the monomer removal step depends on the temperature and the pH of the water and is preferably in the range from 0.5 to 10 minutes as described above, and is more preferably within a range from 0.5 to 5 minutes and furthermore preferably from 1 to 3 minutes. When the contact time is less than 0.5 minute, it is difficult to sufficiently remove the monomer, and when the contact time exceeds 10 minutes, unpreferably the step becomes too long and the water content of the film at the time of stretching increases.

The water temperature, the pH and the contact time of water with the film in the monomer removal are intimately related to each other. For the purpose of removing the monomer, the higher the water temperature, the more effective; however, when the temperature is set to be high, the unstretched film tends to undergo wrinkling. When the temperature is set to be low, the monomer removal takes a long time to degrade the productivity. When the pH is set to be 6.5 to 9.0 so as to fall within a weakly alkaline region, a relatively short time treatment enables, even at a low temperature, to selectively remove the monomer concerned.

In the case where stretching is conducted after the monomer removal step, for the purpose of avoiding troubles at the time of stretching, the unstretched polyamide resin film is treated in the monomer removal step to remove the monomer, thereafter in the water content regulation step the water content of the polyamide resin film is regulated to be preferably 2 to 10% by mass, more preferable, 4 to 8% by mass, and then the stretching is suitably conducted. When the water content is lower than 2% by mass, the stretching stress is increased and accordingly tends to cause troubles such as film breaking. When the water content is higher than 10% by mass, the thickness unevenness of the unstretched film becomes large, and the thickness unevenness of the obtained stretched film also tends to become large. In the water content regulation step, when the water content of the film is low, the water content is usually regulated by making the film pass through a water content regulation vessel set at a temperature of 40 to 90°C, more preferably 50 to 80°C and by regulating the passage time. In the water content regulation vessel, purified water is usually used; however, where necessary, for example, a dye, a surfactant and a plasticizer may be contained in the treatment liquid. Alternatively, the water content may also be regulated by spraying water vapor to the film, or may also be regulated by bringing the film into contact with a roll having a water absorbing layer.

In the biaxially stretched polyamide resin film having gas barrier properties of the present invention, a gas barrier coat layer is formed on at least one side of the substrate film. The gas barrier coat layer is preferably formed on the substrate film through the intermediary of an anchor coat layer because the adhesion between the substrate film and the gas barrier coat layer is improved.

The anchor coat layer is formed by applying a coating agent to the substrate film. As the coating agent, known coating agents can be used. Examples of the coating agent include isocyanate-based, polyurethane-based, polyester-based, polyethyleneimine-based, polybutadiene-based, polyolefin-based and alkyl titanate-based anchor coating agents. Preferable among these are the isocyanate-based, polyurethane-based and polyester-based anchor coating agents. Specifically, preferable are one of isocyanate compounds; one of polyurethanes and urethane prepolymers, or mixtures of two or more of these compounds, and reaction products of these compounds; and mixtures and reaction products between isocyanate and one or two or more of polyesters, polyols and polyethers; and solutions or dispersions of these compounds, mixtures and reaction products.

The thickness of the anchor coat layer is preferably 0.1 to 3 µm and more preferably 0.3 to 0.6 µm.

As the material for forming the gas barrier coat layer, polyvinylidene chloride copolymer (hereinafter referred to as "PVDC") is suitable. However, the material for forming the gas barrier coat layer is not particularly limited as long as the production process of the present invention can be applied to the material.

In the present invention, PVDC is suitably a polymer including 60% by mass or more, preferably, 70 to 97% by mass of the vinylidene chloride unit, and is used in a form of a latex. The average particle size of PVDC in the latex is preferably 0.05 to 0.5 µm and more preferably 0.07 to 0.3 µm.

The amount of the gas barrier coat layer formed on the substrate film is required to be within a range from 0.5 to 5.0 µm, and is preferably within a range from 0.7 to 3.0 µm and more preferably within a range from 1.0 to 2.5 µm, in terms of the thickness of the gas-barrier coat layer. When the coat thickness is thinner than 0.5 µm, no sufficient gas-barrier properties are developed. On the other hand, when the coat thickness exceeds 5 µm, the effect of the coat layer is saturated and additionally the physical properties of the film may be impaired.

The adhesion strength between the substrate film and the gas barrier coat layer is preferably 0.8 N/cm or more, more preferably 1.0 N/cm or more and furthermore preferably 2.0 N/cm or more. When the adhesion strength is lower than 0.8 N/cm, the substrate film and the gas barrier coat layer may be delaminated from each other at the time of a boiling treatment or a retorting treatment, or no sufficient sealing strength between the substrate film and the gas barrier coat layer may be attained, in the case where the biaxially stretched polyamide resin film having gas barrier properties of the present invention is used as a packaging material.

In the gas barrier coat layer, additives such as an antiblocking agent, a crosslinking agent, a water repellant and an antistatic agent may be mixed within a range not impairing the advantages of the present invention.

The method for coating the gas barrier coat layer is not particularly limited; the following methods may be adopted: a gravure roll coating method, a reverse roll coating method, an air knife coating method, a reverse gravure coating method and a Mayer bar coating method, and various coating methods as combinations of these methods, and various spraying methods.

For the purpose of improving the adhesion between the substrate film and the anchor coat layer or the gas barrier coat layer or improving the coatability of the substrate film, the substrate film may be subjected to a corona discharge treatment or the like before forming the anchor coat layer and the gas barrier coat layer.

The thickness of the biaxially stretched polyamide resin film having gas barrier properties of the present invention is not particularly limited; however, when this film is used for packaging application, the thickness of this film is preferably within a range from 10 to 40 µm.

When the biaxially stretched polyamide resin film having gas barrier properties of the present invention is produced, it is preferable to coat the substrate film with the anchor coat layer and the gas barrier coat layer after the substrate film has been biaxially stretched. The coating after the step of biaxial stretching facilitates the control of the coat thickness of the anchor coat layer and the coat thickness of the gas barrier coat layer.

For the obtained polyamide resin film having gas barrier properties, the coated surface or the uncoated surface thereof may be subjected to, where necessary, physical and chemical treatments such as a corona discharge treatment, a plating treatment, a cleaning treatment, a metal treatment and various coating treatments.

The polyamide resin film having gas barrier properties of the present invention obtained as described above can be suitably used as a packaging material because the film concerned has excellent gas barrier properties in addition to the excellent strength and the excellent mechanical properties as a polyamide film, and is excellent in the adhesion between the substrate film and the coat layer.

The biaxially stretched polyamide resin film having gas barrier properties of the present invention can be used over a wide range as packaging materials for food, medicines, miscellaneous goods and the like, by forming a laminated film by laminating with a sealant layer such as a polyolefin layer by using a known method such as a dry laminating method or an extrusion laminating method, and by forming a package bag by heat bonding the sealant layers to each other.

This packaging material can be made to have a configuration including at least one layer of the biaxially stretched polyamide resin film having gas barrier properties. Examples of the specific layer configuration of a laminated film for constituting a packaging bag may include the following examples (i) to (vii), but are not limited to the following examples. In the following examples, "X" denotes the biaxially stretched polyamide resin film having gas barrier properties of the present invention, "PET" denotes a polyethylene terephthalate film, "ON" denotes a stretched nylon film, and "OPP" denotes a stretched polypropylene film.
(i) X/sealant
   (ii) PET/X/sealant
   (iii) ON/X/sealant
   (iv) OPP/X/sealant
   (v) X/ON/sealant
   (vi) X/X/sealant (with the proviso that the lamination in X/X is such that the gas barrier coat layer and the substrate polyamide resin film layer face each other)
   (vii) X/X/sealant (with the proviso that the lamination in X/X is such that the two gas barrier coat layers face each other)

### Examples

Hereinafter, the present invention is described more specifically with reference to Examples.

However, the present invention is not limited to following Examples.

The evaluation methods of the various physical properties in following Examples and Comparative Examples are as follows.

### (1) Amounts of the extracted caprolactam monomer and cyclic dimer in the film

From the monomer and cyclic dimer concentrations in a sample measured under the following conditions, the masses of the monomer and cyclic dimer in the sample were calculated. The obtained masses were divided by the mass of the film to derive the amounts (percent by mass) of the extracted monomer and cyclic dimer.

### (Preparation of measurement sample)

First, 0.5 g of a film cut to a 0.5-cm square or squares was precisely weighed and placed in a 10-ml headspace vial; 10 ml of distilled water was added into the vial and the vial was hermetically sealed with a butyl rubber stopper and an aluminum cap; thereafter, extraction was conducted for 2 hours in a boiling water bath (100°C); then, after cooling of the vial, filtration was conducted with a 0.45-µm disc filter to prepare a measurement sample.

### (Calibration curves)

First, 0.1 g of caprolactam was dissolved in 100 ml of distilled water, and then the solution thus obtained was further diluted to prepare a 100-ppm standard solution. The dimer is lower in solubility, and 0.01 g of the dimer was dissolved in 100 ml of distilled water to prepare a standard solution. Each of these standard solutions was injected in amounts of 1 to 10 µl to obtain calibration curves.

### (Apparatus, conditions and others)

(i) Apparatus: HP 1100 HPLC system manufactured by Hewlett Packard Corp.
(ii) Columns: Waters Puresil 5µ C18 200 angstroms; 4.6 mm x 250 mm (40°C)
(iii) Detector: UV 210nm
(iv) Elution: Elution was conducted for 12 minutes with an eluent of methanol/water (volume ratio) = 35/75; then, the eluent was changed over to an eluent of methanol/water (volume ratio) = 100/0 over a period of 3 minutes and elution was conducted for 30 minutes; and then, the eluent was changed over to the eluent of methanol/water (volume ratio) = 35/75 over a period of 5 minutes and elution was conducted for 20 minutes.
(v) Flow rate: 0.7 ml/min
(vi) Injection volume: 10 ml for an unstretched film because of the larger monomer amount, and 50 ml for a stretched film because of the smaller monomer amount
(vii) Detection limit: 3 ppm

### (2) Water content

An unstretched film having been subjected to a water absorption treatment was sampled and placed in a weighing bottle and then dried; thus, the water content was derived from the mass variation between before and after drying.

### (3) Relative viscosity

The pellets of a polyamide resin were dissolved in 96% sulfuric acid so as for the concentration to be 1 g/dl, and the viscosity of the solution thus obtained was measured under the temperature condition of 25°C.

### (4) Terminal amino group

A polyamide resin was dissolved in a solvent (phenol/ethanol = 4/1 in volume ratio), a predetermined amount of 0.02 N hydrochloric acid was added to the solution thus obtained, and back titration was conducted with a 0.02 N sodium hydroxide solution.

### (5) Terminal carboxyl group

The resin to be measured was dissolved in benzyl alcohol set at 180°C, phenolphthalein indicator was added to the solution thus obtained, and the solution was titrated with a 0.02 N ethanol solution of potassium hydroxide.

### (6) Gas barrier properties

The oxygen permeability was measured under an atmosphere of 20°C and 65% RH by using an oxygen barrier tester (OX-TRAN 2/20) manufactured by Mocon, Inc. The thus obtained oxygen permeability was adopted as an index for the gas barrier properties.

### (7) Anti-pinhole property

The anti-pinhole property was evaluated on the basis of the Gelbo test that provided an index for the flex resistance. Specifically, from a sample film, a sample of a size of 300 mm in MD (machine direction) x 200 mm in TD (transverse direction) was cut out. The sample was exerted with 5000 times of 440°-rotation-stretch movements under an environment of 20°C and 65% RH, by using the Gelbo tester manufactured by Tester Sangyo Co., Ltd. Thereafter, the number of the pinholes generated in the sample was counted.

### (8) Adhesion strength

The PVDC-coated side of a sample film was coated with a urethane adhesive (LX-401/SP-60, two-part type, manufactured by Dainippon Ink and Chemicals, Inc.) so as for the coating amount to be 3.0 g/m² (dry), a sealant film (LLDPE, linear low density polyethylene film manufactured by Tohcello Co., Ltd., T.U.X. FCS, thickness: 50 µm) was bonded by dry laminating, and aging was conducted at 40°C for 3 days to yield a laminated film.

The obtained laminated film was cut into strips of a size of 100 mm in MD x 15 mm in TD under an environment of 20°C and 65% RH, and each of the strips was peeled off by 30 mm in MD between the substrate and the sealant by using a pair of tweezers, and thus laminate strength test specimens were prepared.

By using a tensile tester (AG-100E, manufactured by Shimadzu Corp.) equipped with a load cell for 50 N measurement and sample chucks, the peeled ends of each of the specimens were secured. Thereafter, each of the specimens was peeled by 50 mm in MD at a tensile rate of 300 mm/min while each of the specimens was being maintained in a "T-shape" by the measurer himself/herself, and the average value of the strength at that time was gauged. Such a measurement was conducted for five times for each of the samples and the average value of the thus obtained values was taken as the adhesion strength.

When the adhesion strength between the substrate film and the barrier coat layer is insufficient, the adhesion strength comes to be low at the time of the above-described measurement, and additionally, the peeling interface is moved mainly to "between the substrate film and the barrier coat layer," more specifically mainly to "between the substrate film and the anchor coat layer." Therefore, the measured value obtained at that time was taken as the index indicating the adhesion between the substrate film and the barrier coat layer. The cases where the adhesion strength thus obtained was 0.8 N/cm or more were determined as passing.

### [Materials used]

The materials used in following Examples and Comparative Examples are as follows.

### (Base chip)

In a hermetically sealed reaction vessel equipped with a stirrer, 100 parts by mass of s-caprolactam and 0.12 part by mass of benzoic acid were placed, increased in temperature and allowed to undergo polycondensation reaction under a positive pressure of 0.5 MPa at a temperature of 260°C. The reaction product thus obtained was dispensed from the reaction vessel and then cut into chip shape. The chip-shaped product was further refined and dried to yield the base chip. In this chip, the terminal carboxyl group amount was found to be 46 mmol/kg, the terminal amino group amount was found to be 36 mmol/kg and the relative viscosity was found to be 3.03.

### (Master chip)

A master chip was prepared by melt-mixing 6 parts by mass of an inorganic fine particle (Syloid SY-150, manufactured by Mizusawa Industrial Chemicals, Ltd.) with 100 parts by mass of the base chip.

### [Examples and Comparative Examples]

### Example 1

The base chip and the master chip were blended with each other so as for the mixing ratio of the inorganic fine particle to be 0.05% by mass, placed in an extruder and melted in a cylinder heated to a temperature of 270°C. The melt was extruded from a T-die orifice in a sheet shape, and rapidly cooled by bringing the sheet into close contact with a rotating drum cooled to 10°C to yield a 150-µm-thick unstretched film. The amount of the extracted monomer of the unstretched film was found to be 0.189% by mass.

Next, the above-described unstretched film was guided into a monomer removal vessel set at the temperature and the pH shown in Table 1, and immersed in water for the time as described in Table 1 as the monomer removal step. Thereafter, the same film was guided into a water content regulation vessel set at 60°C and immersed in water for 20 seconds as the water content regulation step to be made to absorb water to attain the water content shown in Table 1. Then the water-absorbed unstretched film was guided into a simultaneous biaxial stretching machine and subjected to a simultaneous biaxial stretching with a longitudinal magnification of 3.3 and a transverse magnification of 3.0. Successively, the stretched film was heat treated at a temperature of 210°C, and subjected to a relaxation treatment of 5% in the transverse direction to yield a 15-µm-thick substrate film. The amount of the extracted monomer of the obtained substrate film was evaluated and the result thus obtained is shown in Table 1.

As shown in Table 1, only the monomer was selectively removed and the amount of the extracted monomer was found to be extremely decreased.

Next, the obtained substrate film was coated with a urethane anchoring agent (A310/A-3, manufactured by Mitsui Chemicals, Inc.) so as for the applied amount to be 0.5 g/m² (DRY). In this case, the drying conditions were such that the temperature was 80°C and the time was 10 seconds. The thickness of the anchor coat layer thus obtained was found to be 0.5 µm.

Further, the anchor coat layer was coated with a PVDC latex (boil-resistant, barrier-type L536B, solid content concentration: 49% by mass, manufactured by Asahi Kasei Chemicals Corp.) as a barrier coating agent so as for the coat thickness to be 2.2 µm. In this case, the drying temperature was set at 110°C and the drying time was set at 15 seconds.

The gas barrier properties, the anti-pinhole property and adhesion strength of the thus obtained biaxially stretched polyamide resin film having gas barrier properties were measured. The results thus obtained are shown in Table 1.

### Examples 2 and 3

In each of Examples 2 and 3, the coat thickness of the barrier coating agent was altered as described in Table 1; otherwise in the same manner as in Example 1, a biaxially stretched polyamide resin film having gas barrier properties was obtained. The evaluation results of the obtained films are shown in Table 1.

### Examples 4 and 5

In each of Examples 4 and 5, the conditions of the monomer removal step, the film water content and the type of the barrier coating agent (used was a "PVDC latex, namely, a high barrier-type L551B, solid content concentration: 49% by mass, manufactured by Asahi Kasei Chemicals Corp.") and thickness of the barrier coating agent were altered as described in Table 1; otherwise in the same manner as in Example 1, a biaxially stretched polyamide resin film having gas barrier properties was obtained. The evaluation results of the obtained films are shown in Table 1.

### Example 6

The base chip and the master chip were blended with each other so as for the mixing ratio of the inorganic fine particle to be 0.05% by mass, placed in an extruder and melted in a cylinder heated to a temperature of 260°C. The melt was melt extruded from a T-die in a sheet shape, and rapidly cooled by bringing the sheet into close contact with a rotating drum having a surface temperature of 10°C to yield an unstretched film. The amount of the extracted monomer of the unstretched film was found to be 0.373% by mass.

Next, the unstretched film was longitudinally stretched at a temperature of 55°C with a stretching magnification of 2.8 by using an MD stretching machine composed of a group of heating rollers different in circumferential speed from each other. Next, the film was introduced into the monomer removal step under the conditions shown in Table 1, and was transversely stretched at a temperature of 90°C with a stretching magnification of 3.7. Thereafter, in a tenter, the temperature was slowly increased and a heat treatment was conducted at an ultimate maximum temperature of 210°C, and further a 2% relaxation was conducted at 210°C in the TD direction, to yield a 15-µm-thick substrate film. The amount of the extracted monomer of the obtained substrate film was evaluated and the result thus obtained is shown in Table 1.

As compared to Example 1, the type of the barrier coating agent (used was a "PVDC latex, namely, a boil-resistant flexible L529B, solid content concentration: 49% by mass, manufactured by Asahi Kasei Chemicals Corp.") and the thickness of the barrier coating agent applied to the substrate film were altered as described in Table 1. Otherwise in the same manner as in Example 1, a biaxially stretched polyamide resin film having gas barrier properties was obtained. The evaluation results of the obtained film are shown in Table 1.

### Example 7

As compared to Example 1, the coat thickness was altered to 4.0 µm. Otherwise, Example 7 was carried out in the same manner as in Example 1. The evaluation results of the obtained biaxially stretched polyamide resin film having gas barrier properties are shown in Table 1.

### Example 8

A 20% by mass solution prepared by dissolving Salan Resin (F216, manufactured by Asahi Kasei Chemicals Corp.) in a mixed solvent of methyl ethyl ketone/toluene = 2/1 (mass ratio) at 20°C was used as a barrier coating agent. The substrate film was coated with this solution so as to result in the thickness shown in Table 1. Otherwise in the same manner as in Example 1, a biaxially stretched polyamide resin film having gas barrier properties was obtained. The evaluation results of the obtained film are shown in Table 1.

### Example 9

As compared to Example 1, a barrier coat layer was formed directly on the substrate film without applying a urethane anchor agent. Otherwise, Example 9 was carried out in the same manner as in Example 1. The evaluation results of the thus obtained biaxially stretched polyamide resin film having gas barrier properties are shown in Table 1.

### Comparative Example 1

The monomer removal step was omitted. Additionally, the water content of the film after the water content regulation step was made to be 6.0% by mass and the coat thickness was made to be 1.4 µm. Otherwise, Comparative Example 1 was carried out in the same manner as in Example 1. The evaluation results of the thus obtained film are shown in Table 1.

### Comparative Example 2

As compared to Example 1, the conditions of the monomer removal step, the water content of the film and the coat thickness were respectively altered to the values described in Table 1. Otherwise, Comparative Example 2 was carried out in the same manner as in Example 1. The evaluation results of the thus obtained film are shown in Table 1.

### Comparative Examples 3 and 4

In each of Comparative Examples 3 and 4, as compared to Example 1, the type of the barrier coating agent and/or the coat thickness was altered as described in Table 1. Otherwise, Comparative Example 3 and 4 were carried out in the same manner as in Example 1. The evaluation results of the thus obtained films are shown in Table 1.

**[Table 1]**

| | Monomer amount of unstretched film (% by mass) | Monomer removal step | | | Water content regulation step | Stretching method | Monomer amount of stretched film (% by mass) | Coating agent | Coat thickness (µm) | Performances of stretched film | | |
|---|---|---|---|---|---|---|---|---|---|---|---|---|
| | | pH | Temperature (°C) | Time (min) | Film water content (% by mass) | | | | | Gas barrier property (ml/m²·d·MPa) | Anti-pinhole property (number of pinholes) | Adhesion strength, (N/ cm) |
| Example 1 | 0.189 | 7.9 | 53 | 1.0 | 6.3 | Simultaneous stretching | 0.002 | L536B | 2.2 | 72 | 1-3 | 3.5 |
| Example 2 | 0.189 | 7.9 | 53 | 1.0 | 6.3 | Simultaneous stretching | 0.002 | L536B | 0.8 | 125 | 0-1 | 3.2 |
| Example 3 | 0.189 | 7.9 | 53 | 1.0 | 6.3 | Simultaneous stretching | 0.002 | L536B | 3.5 | 48 | 3-5 | 2.9 |
| Example 4 | 0.337 | 7.9 | 68 | 9.0 | 6.5 | Simultaneous stretching | 0.085 | L551B | 1.7 | 67 | 0-2 | 1.7 |
| Example 5 | 0.193 | 8.5 | 25 | 4.0 | 6.7 | simultaneous stretching | 0.038 | LSS1B | 2.0 | 60 | 0-2 | 2.1 |
| Example 6 | 0.373 | 7.9 | 53 | 1.0 | No execution of the step | Successive stretching | 0.004 | L529B | 1.4 | 102 | 0-2 | 2.6 |
| Example 7 | 0.189 | 7.9 | 53 | 1.0 | 6.2 | Simultaneous stretching | 0.002 | L536B | 4.0 | 45 | 3-5 | 3.2 |
| Example 8 | 0.189 | 7.9 | 53 | 1.0 | 6.3 | Simultaneous stretching | 0.002 | F216 | 2.8 | 50 | 3-5 | 4.5 |
| Example 9 | 0.189 | 7.9 | 53 | 1.0 | 6.3 | Simultaneous stretching | 0.002 | L536B | 2.2 | 80 | 1-3 | 1.2 |
| Comparative Example 1 | 0.194 | No execution of the step | | | 6.0 | Simultaneous stretching | 0.107 | L536B | 1.4 | 75 | 0-2 | 0.7 |
| Comparative Example 2 | 0.184 | 6.0 | 53 | 11.0 | 6.2 | Simultaneous stretching | 0.142 | L536B | 2.5 | 60 | 1-3 | 0.5 |
| Comparative Example 3 | 0.189 | 7.9 | 53 | 1.0 | 6.3 | Simultaneous stretching | 0.002 | L551B | 0.3 | 220 | 0-1 | 3.6 |
| Comparative Example4 | 0.189 | 7.9 | 53 | 1.0 | 6.3 | Simultaneous stretching | 0.002 | L536B | 5.3 | 47 | 5-10 | 2.8 |

In any one of Examples 1 to 9, a film excellent in the gas barrier properties, anti-pinhole property and adhesion strength was obtained.

In Comparative Example 1, although the monomer removal step was omitted, the amount of the monomer contained in the obtained substrate film was less than the amount of the monomer contained in the unstretched film; from this fact, it was found that the monomer was emitted into the atmosphere during the stretching step or the heat treatment step. However, in Comparative Example 1, the amount of the monomer in the obtained substrate film was still large and consequently, the adhesion between the substrate film and the barrier coat layer was insufficient.

In Comparative Example 2, the pH in the monomer removal vessel was too low, and consequently, the amount of the monomer in the substrate film was large, and the adhesion between the substrate film and the barrier coat layer was insufficient.

In Comparative Example 3, the amount of the monomer contained in the substrate film was 0.1% by mass or less and the required peel strength was obtained; however, the thickness of the barrier coat layer was too thin and consequently no sufficient barrier properties were obtained.

In Comparative Example 4, the amount of the monomer contained in the substrate film was 0.1% by mass or less and the required peel strength was obtained; however, the thickness of the barrier coat layer was too thick, and consequently the anti-pinhole property was poor although the barrier properties were sufficient.

## Claims

1. A biaxially stretched polyamide resin film having gas barrier properties, wherein a gas barrier coat layer is formed on at least one side of a biaxially stretched polyamide resin film, a thickness of the gas barrier coat layer is 0.5 to 5 µm, and an amount of an extracted monomer in the polyamide resin film is 0.1% by mass or less.

2. The biaxially stretched polyamide resin film having gas barrier properties, according to claim 1, wherein the gas barrier coat layer is formed of a polyvinylidene chloride copolymer.

3. The biaxially stretched polyamide resin film having gas barrier properties, according to claim 1, wherein an adhesion strength between the polyamide resin film and the gas barrier coat layer is 0.8 N/cm or more.

4. The biaxially stretched polyamide resin film having gas barrier properties, according to claim 1, wherein a thickness thereof is 10 to 40 µm.

5. The biaxially stretched polyamide resin film having gas barrier properties, according to claim 1, wherein the gas barrier coat layer is formed, through the intermediary of an anchor coat layer, on at least one side of the biaxially stretched polyamide resin film.

6. A process for producing the biaxially stretched polyamide resin film having gas barrier properties as set forth in claim 1, the process comprising in an order of description:
removing a monomer in an unstretched polyamide resin film;
biaxial stretching; and
forming a gas barrier coat layer.

7. A process for producing the biaxially stretched polyamide resin film having gas barrier properties as set forth in claim 5, the process comprising in an order of description:
removing a monomer in an unstretched polyamide resin film;
biaxial stretching;
forming an anchor coat layer; and
forming a gas barrier coat layer.

8. The process for producing a biaxially stretched polyamide resin film having gas barrier properties, according to claim 6 or 7, wherein in the removing the monomer, the film is brought into contact with water set at a pH of 6.5 to 9.0 and at a temperature of 20 to 70°C for 0.5 to 10 minutes.

9. The process for producing a biaxially stretched polyamide resin film having gas barrier properties, according to claim 6 or 7, wherein:
the process comprises regulating a water content after the removing the monomer and before the biaxial stretching; and
in the regulating the water content, a water content of an unstretched polyamide resin film is set at 2 to 10% by mass.

10. A packaging material comprising at least one layer of the biaxially stretched polyamide resin film having gas barrier properties according to any one of claims 1 to 5.

## Patentansprüche

1. Biaxial gestreckter Polyamidharzfilm mit Gassperreigenschaften, wobei eine Gassperrüberzugsschicht auf mindestens einer Seite eines biaxial gestreckten Polyamidharzfilms ausgebildet ist, wobei eine Dicke der Gassperrüberzugsschicht 0,5 bis 5 µm beträgt und eine Menge eines extrahierten Monomers im Polyamidharzfilm 0,1 Masse-% oder weniger beträgt.

2. Biaxial gestreckter Polyamidharzfilm mit Gassperreigenschaften nach Anspruch 1, wobei die Gassperrüberzugsschicht aus einem Polyvinylidenchlorid-Copolymer gebildet ist.

3. Biaxial gestreckter Polyamidharzfilm mit Gassperreigenschaften nach Anspruch 1, wobei die Haftfestigkeit zwischen dem Polyamidharzfilm und der Gassperrüberzugsschicht 0,8 N/cm oder mehr beträgt.

4. Biaxial gestreckter Polyamidharzfilm mit Gassperreigenschaften nach Anspruch 1, wobei eine Dicke davon 10 bis 40 µm beträgt.

5. Biaxial gestreckter Polyamidharzfilm mit Gassperreigenschaften nach Anspruch 1, wobei die Gassperrüberzugsschicht durch die Vermittlung einer Ankerüberzugsschicht auf mindestens einer Seite des biaxial gestreckten Polyamidharzfilms gebildet ist.

6. Prozess zur Herstellung des biaxial gestreckten Polyamidharzfilms mit Gassperreigenschaften nach Anspruch 1, wobei der Prozess in Reihenfolge der Beschreibung umfasst:
Entfernen eines Monomers in einem ungestreckten Polyamidharzfilm;
biaxiales Strecken; und
Bilden einer Gassperrüberzugsschicht.

7. Prozess zur Herstellung des biaxial gestreckten Polyamidharzfilms mit Gassperreigenschaften nach Anspruch 5, wobei der Prozess in Reihenfolge der Beschreibung umfasst:
Entfernen eines Monomers in einem ungestreckten Polyamidharzfilm;
biaxiales Strecken;
Bilden einer Ankerüberzugsschicht; und
Bilden einer Gassperrüberzugsschicht.

8. Prozess zur Herstellung eines biaxial gestreckten Polyamidharzfilms mit Gassperreigenschaften nach Anspruch 6 oder 7, wobei beim Entfernen des Monomers der Film mit Wasser in Kontakt gebracht wird, das für 0,5 bis 10 Minuten auf einen pH von 6,5 bis 9,0 und eine Temperatur von 20 bis 70 °C festgelegt wird.

9. Prozess zur Herstellung eines biaxial gestreckten Polyamidharzfilms mit Gassperreigenschaften nach Anspruch 6 oder 7, wobei:
der Prozess nach dem Entfernen des Monomers und vor dem biaxialen Strecken ein Regulieren des Wassergehalts umfasst; und
beim Regulieren des Wassergehalts ein Wassergehalt eines ungestreckten Polyamidharzfilms auf 2 bis 10 Masse-% festgelegt wird.

10. Verpackungsmaterial, umfassend mindestens eine Schicht des biaxial gestreckten Polyamidharzfilms mit Gassperreigenschaften nach einem der Ansprüche 1 bis 5.

## Revendications

1. Film de résine de polyamide étiré biaxialement ayant des propriétés de barrière aux gaz, dans lequel une couche de revêtement barrière aux gaz est formée sur au moins un côté d'un film de résine de polyamide étiré biaxialement, une épaisseur de la couche de revêtement barrière aux gaz est de 0,5 à 5 µm, et une quantité d'un monomère extrait dans le film de résine de polyamide est inférieure ou égal à 0,1% en masse.

2. Film de résine de polyamide étiré biaxialement ayant des propriétés de barrière aux gaz, selon la revendication 1, dans lequel la couche de revêtement barrière aux gaz est formée d'un copolymère de chlorure de polyvinylidène.

3. Film de résine de polyamide étiré biaxialement ayant des propriétés de barrière aux gaz, selon la revendication 1, dans lequel une force d'adhésion entre le film de résine de polyamide et la couche de revêtement barrière aux gaz est supérieure ou égale à 0,8 N/cm.

4. Film de résine de polyamide étiré biaxialement ayant des propriétés de barrière aux gaz, selon la revendication 1, dans lequel l'une de ses épaisseurs est de 10 à 40 µm.

5. Film de résine de polyamide étiré biaxialement ayant des propriétés de barrière aux gaz, selon la revendication 1, dans lequel la couche de revêtement barrière aux gaz est formée, par l'intermédiaire d'une couche de revêtement d'ancrage, sur au moins un côté du film de résine de polyamide étiré biaxialement.

6. Processus de production du film de résine de polyamide étiré biaxialement ayant des propriétés de barrière aux gaz selon la revendication 1, le processus comprenant dans un ordre de description :
l'élimination d'un monomère dans un film de résine de polyamide non étiré ;
l'étirement biaxial ; et
la formation d'une couche de revêtement barrière aux gaz.

7. Processus de production du film de résine de polyamide étiré biaxialement ayant des propriétés de barrière aux selon la revendication 5, le processus comprenant dans un ordre de description :
l'élimination d'un monomère dans un film de résine de polyamide non étiré ;
l'étirement biaxial ;
la formation d'une couche de revêtement d'ancrage ; et
la formation d'une couche de revêtement barrière aux gaz.

8. Processus de production d'un film de résine de polyamide étiré biaxialement ayant des propriétés de barrière aux gaz, selon la revendication 6 ou 7, dans lequel, lors de l'élimination du monomère, le film est mis en contact avec de l'eau réglée à un pH allant de 6,5 à 9,0 et à une température allant de 20 à 70°C pendant 0,5 à 10 minutes.

9. Processus de production d'un film de résine de polyamide étiré biaxialement ayant des propriétés de barrière aux gaz, selon la revendication 6 ou 7, dans lequel :
le processus comprend la régulation d'une teneur en eau après l'élimination du monomère et avant l'étirement biaxial ; et
lors de la régulation de la teneur en eau, une teneur en eau d'un film de résine de polyamide non étiré est réglée à une valeur allant de 2 à 10% en masse.

10. Matériau d'emballage comprenant au moins une couche du film de résine de polyamide étiré biaxialement ayant des propriétés de barrière aux gaz selon l'une quelconque des revendications 1 à 5.
